# EUROPEAN PATENT SPECIFICATION

(11) **EP 2 705 260 B1**
(45) Date of publication and mention of the grant of the patent: **06.06.2018**
(21) Application number: 12779961.7
(22) Date of filing: 19.04.2012
(51) Int. Cl.: F16B 12/46, F16B 12/20

(54) **COUPLING DEVICE FOR FURNITURE AND FURNISHING ARTICLES**
VERBINDUNGSVORRICHTUNG FÜR MÖBELSTÜCKE UND MÖBELARTIKEL
DISPOSITIF DE RACCORDEMENT POUR MEUBLE ET ARTICLES D'AMEUBLEMENT

(30) Priority: 03.05.2011 IT MI20110736
(43) Date of publication of application: 12.03.2014
(73) Proprietor: DOGAMA S.r.l., 22060 Carugo (CO) (IT)
(72) Inventor: DONATIELLO, Gaetano, I-20851 Lissone (MB) (IT)
(74) Representative: Martegani, Franco
(86) International application number: PCT/IB2012/000789
(87) International publication number: WO 2012/150490

(56) References cited:
- CA-A1- 2 355 944
- DE-A1- 2 610 200
- DE-C- 343 537
- FR-A- 1 467 282
- US-A1- 2009 123 222

## Description

The present invention relates to a coupling device for furniture and furnishing articles.

In the field of furniture and furnishing articles, for example for the coupling of a shoulder of a piece of furniture with a bottom element or base, coupling devices are used which allow the parts to be kept firmly flanked and blocked to each other.

One of these devices is at least partially illustrated in international patent application WO 2008/053176.

As can be seen from this document and observed in the drawings, a cam element is produced which, in combination with a suitable pin or tie-rod (not shown) creates the forced coupling between the furniture parts.

The cam element, for example, is produced from a sheared plate in the form of a flat draft which is then folded over to form the cam element. This element is inserted in a base body or bottom, for example, in which a tie-rod is in turn inserted in a hole, screwed into a shoulder, to cooperate with the same.

The free end of the tie-rod is in fact inserted in a bottom or base hole of the piece of furniture to be coupled, where it is firmly positioned, by rotation.

These parts of the device are currently made of various materials, such as metal and plastic, aluminium and plastic, aluminium and steel, processed, moulded and/or die-casted.

In these known arrangements, the tie-rod acts as a connecting point for the cam and a guide in the shoulder of the piece of furniture and can be obtained from moulded steel (wire), from turning (mechanical processing), from aluminium die-casting. Alternatively, it can be composed of 2 pieces (metal + plastic, aluminium + plastic, aluminium + steel), to obtain the double function of guide and tie-rod.

The dimensions and form are determined by the forkshaped throat present on the cam and the assembly is normally effected by screwing on the base of the furniture.

The cam is produced by zamak die-casting (subsequently treated on the surface) or in plastic material in order to obtain the project geometries. The thicknesses and shapes are decisive for guaranteeing the load resistance, in relation to the mechanical characteristics of the material used. The cam is produced with a fork-connection on both sides of the tie-rod to resist vertical and axial tightening stress.

According to users, these known devices have a series of defects, such as:
- cost of the tie-rod, due to the processing technology, dimensions, quality and quantity of the material used;
- cost of the cam, due to the processing technology, dimensions, quality and quantity of the material used;
- the tie-rod must be screwed onto the shoulder of the piece of furniture or into an additional bush (with time-waste and difficulty of alignment);
- furthermore, in order to connect with the tie-rod, the cam must have a double cam (fork) and the fork on the cam is subject to opposed axial thrusts which require the necessity for larger dimensions;
- the material used for the cam has a low mechanical resistance and therefore requires larger dimensions and the necessity for a significant amount of material used.

The document CA 2355944A1 also describes a coupling device which has the same drawbacks mentioned above. Also in this document:
- the cam is made of zamak,
- the stress is both axial and transversal, with the danger of breakage and incorrect alignment of the furniture parts,
- the encumbrances of the cam is high as the cam is situated on the side of the respective element as moulding channel and both of the opposite lateral sides of the rod of the tie-rod operate with it.
- DE 343537 C **(D2) relates to a very simple coupling device in which cut-out of a tie-rod element cooperates with a corresponding projection.**

A general objective of the present invention is to solve the above-mentioned drawbacks of the known art in a simple, economical and particularly functional manner.

Another objective is to provide a particularly functional device, which is rapid to install, easy to use and with a low cost.

A further objective is to provide a device which is rapid to assemble, particularly resistant, also in panels having smaller thicknesses and with an equal hold.

In view of the above objectives, according to the present invention, a coupling device for furniture and furnishing articles had been conceived, having the characteristics described in the enclosed claims.

The structural and functional characteristics of the present invention and its advantages with respect to the known art will be even more evident from the following description, referring to the enclosed drawings, which, among other things, show a scheme of the embodiments of a coupling device for furniture and furnishing articles produced in accordance with the invention itself. In the drawings:
- figure 1 shows a schematic and synthetic view of a section of a coupling device for furniture and furnishing articles in a first embodiment according to the present invention, assembled between a shoulder and a base, whereas figure 1a shows a view from above of the parts illustrated in figure 1;

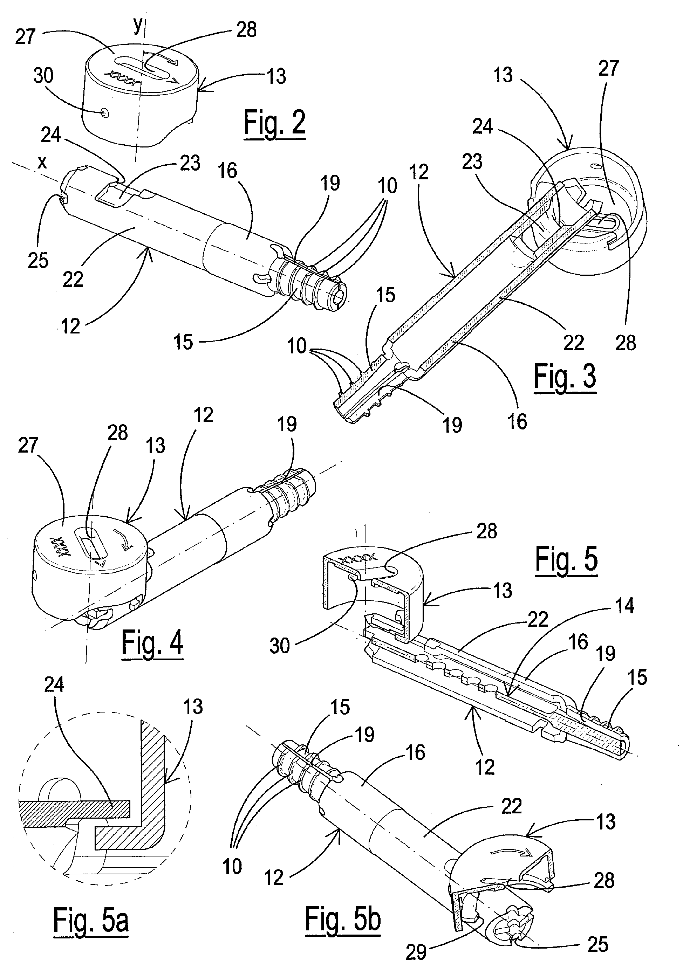

- figure 2 shows an exploded perspective view from above of the device according to figure 1, without the expanding element;
- figure 3 shows an exploded perspective view from below of the device according to figure 1, partially in section, without the expanding element;
- figures 4 and 5 also show perspective views of the device alone according to figure 1, with the expanding element in operative condition with figure 5a which shows a sectional view of an enlarged detail of the engagement between the parts shown in figure 1 and figure 5b illustrates the engagement between the parts in greater detail;
- figures 6 and 7 are different raised side views of the tie-rod of the device according to figure 1;
- figures 8 and 9 are different perspective views of the tie-rod of the device according to figure 1;
- figures 10, 11 and 12 are views from below, in raised side views and from above, of the cam element alone of the device according to figure 1;
- figures 13 and 14 are different perspective views of the cam element of the device according to fig. 1;
- figures 15, 16 and 17 are two raised side view, rotated with respect to each other by 90° and a perspective view of the expanding element of the device according to figure 1;
- figure 18 shows the section of figure 1 in which the cam element is exploded and figure 18a is a view from above of figure 18 with the cam element inserted.

With reference to the figures in general, these show a coupling device for furniture and furnishing articles, indicated as a whole with 11, comprising, in combination, a tie-rod element 12, a cam element 13 and an expanding element 14 which can be inserted in the tie-rod 12.

The tie-rod 12 and the cam element 13 have a substantially cylindrical form with main axes X and Y, positioned, during functioning, perpendicular and intersecting with respect to each other. As the expanding element 14 is inside the tie-rod element 12, it has a movement and centring coaxial to the same.

All three elements 12, 13 and 14, according to the invention, are made of metal, for example, steel, and can be produced through the sheet or wire cold deformation technology, as in case of the expanding element 14.

In this way there is smaller amount of material used, with an improved quality and with lower overall costs.

The production technology through sheet or wire cold deformation also implies lower costs even with the high quality of the product obtained and a high resistance.

The tie-rod 12 comprises a first portion 15 which, before expansion, is tapered with a smaller diameter, with outer straight or helicoidal holding teeth 10, without edges, which can be inserted into a specific blind hole 17 obtained in a shoulder 18 of a piece of furniture (not shown). The first portion 15 includes notches 19 situated according to the direction of the axis X along the mantle of the tie-rod 12. A second cylindrical portion 16, with a larger diameter, situated at the center of the tie-rod element 12 acts as a centring element of the tie-rod in a blind hole 20 positioned in a base 21 of a piece of furniture in a direction which is such as to be aligned with that of the hole 17 of the shoulder 18.

A third cylindrical portion 22, with a slightly smaller diameter with respect to the second portion 16 to favour the assembly of the second cylindrical central portion 16, occupies the remaining part of the blind hole 20 and comprises a window 23 on its surface, having a tooth 24 on its peripheral surface for collaboration with the cam element 13 which withholds it axially, so that there is only axial stress on the tie-rod, and a connection for the vertical holding. In order to firmly block the base and shoulder together, by rotating the cam, a profile 35 is positioned on the pin 12 in correspondence with the tooth 24, which cooperates with the profile 37 of the cam 13.

Radial slots 25 are situated at the free end facing the outside of this third cylindrical portion 22 having a diameter slightly smaller than the second central cylindrical portion 16, for the correct assembly of the blade, a better orientation of the pin and for disassembly with a screwdriver when the teeth 10 are helicoidal.

The cam element 13 is situated in a further blind hole 26 positioned on the base 21 of the piece of furniture in a perpendicular direction with respect to that of the first hole 20, with a much larger diameter with respect to the same.

The cam element 13 having a cylindrical form and cup-shaped, has a closed base 27 in the center of which there is a radial slot 28 for engagement with the screwdriver.

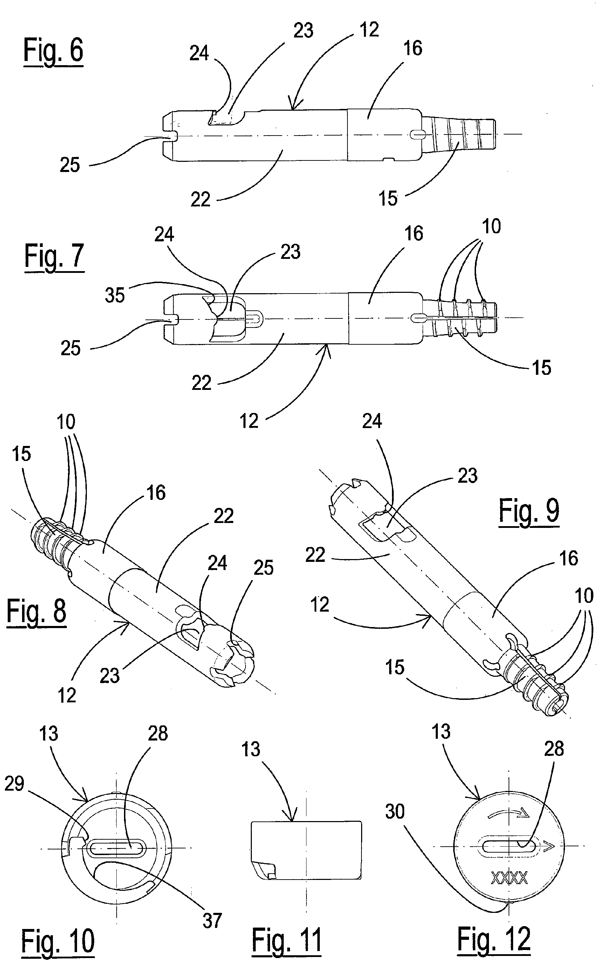

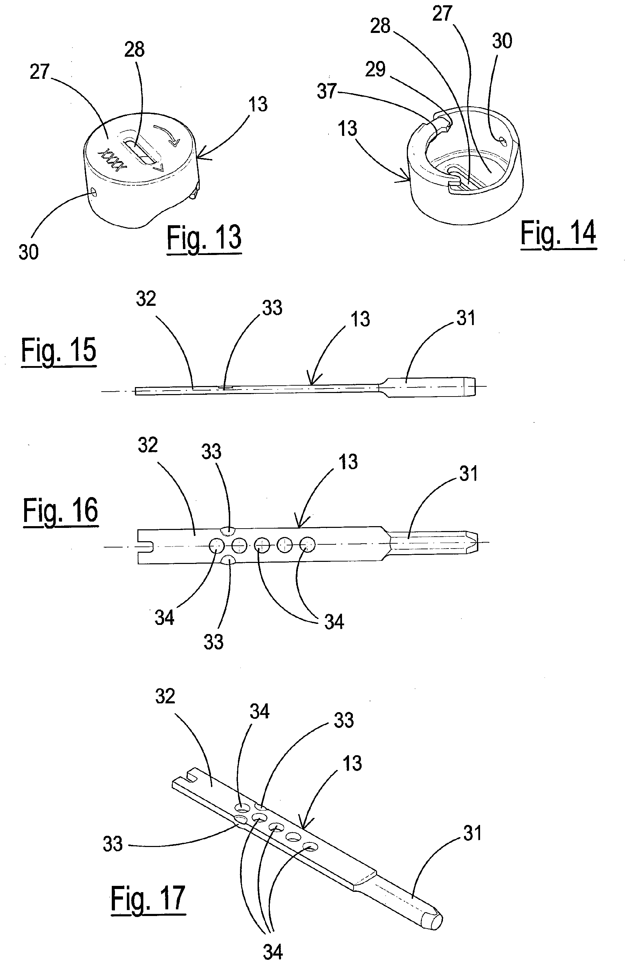

The side wall of the cam element 13, in one of its free edges, has a tightening cam flap 37 (figure 14) suitable for cooperating with the profile 35 (figure 7) and causing the axial sliding of the tie-rod 12 for the tightening of the device (and therefore of the base and shoulder) of the present invention.

The side surface of the cam element 13 comprises a friction notch 30 in the blind hole 26.

The expanding element 14 which can be inserted in the tie-rod 12, has, for example, but not necessarily, an enlarged end 31 suitable for being positioned inside the first portion 15 causing its expansion and therefore a stable positioning. It also envisages a remaining flat portion 32 with protruding side notches 33 for preassembly frictioning and a series of holes 34 for disassembly.

The profile 35 of the tie-rod cooperates with the cam flap 37 of the cam element 13 thus creating reciprocal tightening means by activation of the same cam element 13.

The functioning of such a device is fully intuitive and clearly illustrated by the figures which show the components arranged in their operative combination.

The parts of the piece of furniture which receive the coupling device of the present invention are provided with the holes for receiving it. The blind hole 17 is in fact situated on the shoulder 18 and the blind holes 20 and 26 perpendicular to each other, in the base 21 to receive the cam element 13 and tie-rod 12, respectively.

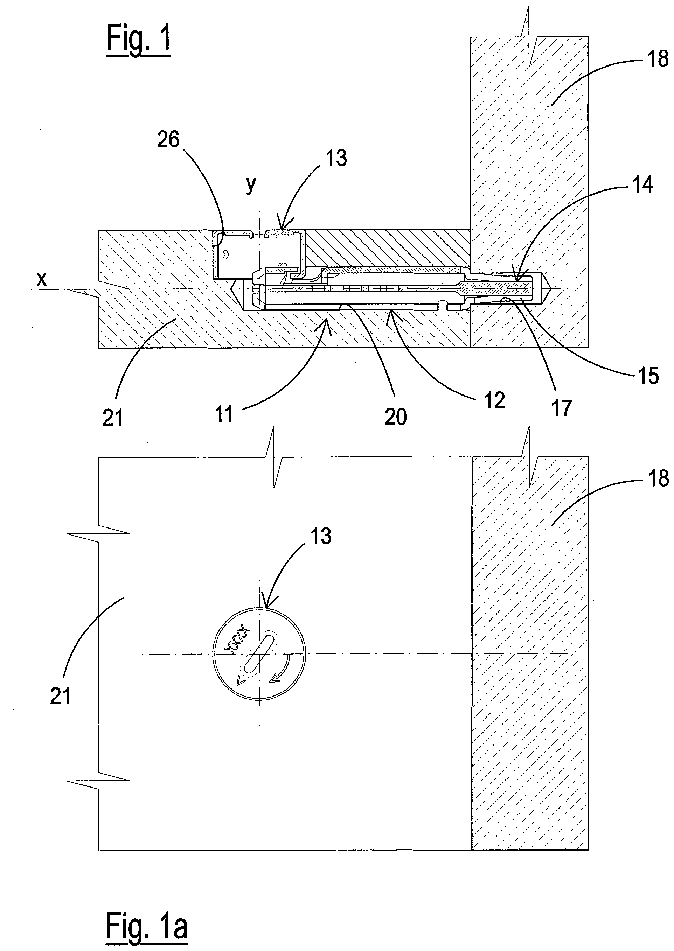

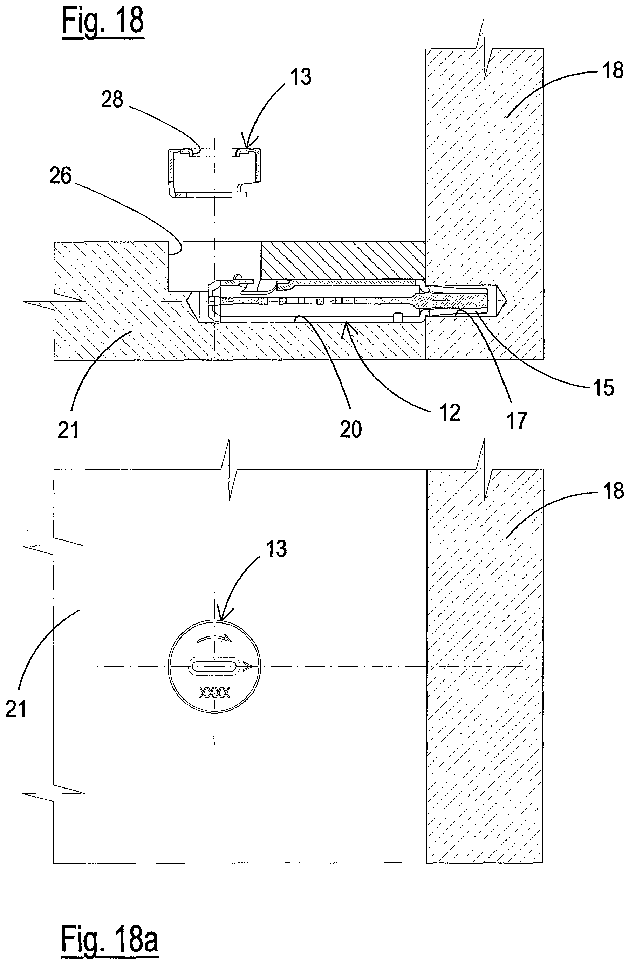

After positioning the tie-rod 12 in the hole 17 of the panel or shoulder 18, an axial pressure is exerted on the expanding element 14 to position it. By moving the panel or shoulder 18 close to the panel or base 21 and inserting the tie-rod 12 into the hole 20, the cam element 13 is then inserted into the respective hole 26 of the base 21 (figure 18a). By rotating said cam element 13 as shown in figure 1a, by engagement of the same with the tie-rod 12, the base moves towards the shoulder.

The various details previously described, in this phase, collaborate with each other to promote this approaching action.

The element indicated with 29 in the figures acts as a safety run-end for the cam rotation, stopping the same cam against the diameter of the tie-rod at the run-end.

With this arrangement, there is only axial stress on the tie-rod through a very simple cam element whereby the arrangement of the cam is only on one side of the element.

Further advantages are obtained with a device according to the present invention, such as the possibility of assembling the tie-rod without screwing (positioning of the hole followed by expansion). This allows a higher precision in the alignment with the possibility of avoiding further guiding forms of the shoulder.

Furthermore, there is the possibility of using the blockage system using panels having a lesser thickness and with the same hold, as:
- the connection elements can have smaller dimensions as they are made of more resistant materials (with respect to zamak and plastic);
- the connection of the cam engages the tie-rod on one side only, thus reducing the depth of the hole;
- the height of the cam can be lesser as it does not have the double fork to sustain opposed axial thrusts; and
- the diameter of the tie-rod can be decreased as it is engaged by the cam only on one side.

In addition, it should be noted that there is the possibility of using pre-coated material (zinc, nickel, etc..) or stainless steel to obtain a higher quality.

Furthermore, there is less visual impact of the cam inside the furniture, as it can have a smaller diameter with the same hold characteristics. In addition, the seat of the cam is less deep with respect to relatively similar solutions so far known.

A stronger hold of the panel is obtained with the same characteristics of the material, due to the possibility of reduced perforations (less deep cam hole).

Finally, it should be noted that as the teeth of the expanding element of the tie-rod have no edges, during expansion, they compress the wood by expanding, obtaining a stress resistance with a smaller cutting depth of the wood.

The objectives mentioned in the preamble of the description have therefore been achieved.

The forms of the structure for the embodiment of a device according to the invention, as also the materials and assembly modes, can obviously differ from those shown as a purely non-limiting example in the drawings.

The protection scope of the present invention is therefore delimited by the enclosed claims.

## Claims

1. A coupling device for furniture and furnishing articles situated between a shoulder (18) and a base (21) comprising, in combination, a tie-rod element (12), a cam element (13) and an expanding element (14) which can be inserted in the tie-rod element (12), said tie-rod element (12) and said cam element (13) having an essentially cylindrical shape with main axes (X and Y) perpendicular to each other and intersecting inside holes (20) and (26) of said base (21) of the piece of furniture, said tie-rod (12), cam element (13) and an expanding element (14) being made of metal or metal alloys, said tie-rod elements (12) and said cam element (13) comprising reciprocal tightening means by the activation of said cam element (13), **characterized in that** said cam element (13) is cup-shaped situated in a blind hole (26) and in one of the free edges of the side surface, it has a tightening cam flap (37) suitable for cooperating with a shaped profile (35) of an opening (23) situated in the cylindrical side portion of the tie-rod element (12), said tie-rod elements (12), cam element (13) and an expanding element (14) being produced by means of plate and/or wire cold deformation.

2. The coupling device according to claim 1, **characterized in that** said opening (23) comprises, on its peripheral surface, said shaped profile (35) and a tooth (24) which cooperates with the cam element (13) so that there is only axial stress on the tie-rod and a connection for the vertical holding.

3. The coupling device according to claim 1, **characterized in that** said tie-rod element (12) comprises a first tapered portion (15) with external non-edged teeth (10), which can be inserted into a blind hole (17) situated in said shoulder (18), and at least a further portion having a larger diameter (16, 22) which can be inserted into a hole of said base (21), where there is an opening (23) having a shaped profile (35) which cooperates with said cam element (13).

4. The coupling device according to claim 3, **characterized in that** said first portion (15) comprises notches (19) positioned according to the axial direction on a mantle of the tie-rod element (12).

5. The coupling device according to claim 3, **characterized in that** said at least one further portion of the tie-rod element (12) having a larger diameter comprises a second cylindrical portion (16) with a larger diameter, positioned at the centre of the tie-rod element (12) and a third cylindrical portion (22) with a slightly smaller diameter with respect to the second portion (16), where said opening (23) is positioned.

6. The coupling device according to claim 5, **characterized in that**, at the free end, facing the outside of this third cylindrical portion (22), there are radial slots (25) for the correct assembly of said expanding element (14) defined by a blade, and for the orientation and disassembly of the tie-rod (12).

7. The coupling device according to claim 6, **characterized in that** one of the ends (31) of said expanding element (14) is suitable for being positioned inside said first portion (15) of said tie-rod element (12) causing its expansion.

8. The coupling device according to claim 6, **characterized in that** in one of its flat portions (32), said expanding element (14) has protruding side notches (33) for pre-assembly friction and a series of holes (34) for disassembly.

## Patentansprüche

1. Kopplungsvorrichtung für Möbel und Möbelgegenstände, die zwischen einer Schulter (18) und einer Basis (21) angeordnet sind, umfassend in Kombination ein Zugstangenelement (12), ein Nockenelement (13) sowie ein sich ausdehnendes Element (14), das in das Zugstangenelement (12) eingesetzt werden kann, wobei das Zugstangenelement (12) und das Nockenelement (13) eine im Wesentlichen zylindrische Form mit Hauptachsen (X und Y) aufweisen, die rechtwinklig zueinander angeordnet sind und sich in Löchern (20) und (26) der Basis (21) des Möbelstücks überschneiden, wobei die Zugstange (12), das Nockenelement (13) und ein sich ausdehnendes Element (14) aus Metall oder Metalllegierungen bestehen, wobei die Zugstangenelemente (12) und das Nockenelement (13) ein hin- und herbewegliches Festziehmittel durch die Aktivierung des Nockenelements (13) umfassen, **dadurch gekennzeichnet, dass** das Nockenelement (13) tassenförmig in einem Blindloch (26) angeordnet ist und es in einem der freien Ränder der Seitenfläche eine Festziehnockenklappe (37) aufweist, die in Zusammenwirken mit einem geformten Profil (35) einer Öffnung (23) geeignet ist, die in dem zylindrischen Seitenabschnitt des Zugstangenelements (12) angeordnet ist, wo bei die Zugstangenelemente (12), das Nockenelement (13) und ein sich ausdehnendes Element (14) mittels einer Platten- und/oder Drahtkaltverformung erzeugt werden.

2. Kopplungsvorrichtung nach Anspruch 1, **dadurch gekennzeichnet, dass** die Öffnung (23) an ihrer Umfangsfläche das geformte Profil (35) sowie einen Zahn (24) umfasst, der mit dem Nockenelement (13) zusammenwirkt, so dass nur eine axiale Beanspruchung an der Zugstange und eine Verbindung für das vertikale Halten vorgesehen sind.

3. Kopplungsvorrichtung nach Anspruch 1, **dadurch gekennzeichnet, dass** das Zugstangenelement (12) einen ersten verjüngten Abschnitt (15) mit einem externen randlosen Zahn (10), der in ein Blindloch (17) eingesetzt sein kann, das in der Schulter (18) angeordnet ist, und zumindest einen weiteren Abschnitt umfasst, der einen größeren Durchmesser (16, 22) aufweist und in ein Loch der Basis (21) eingesetzt sein kann, wobei eine Öffnung (23) mit einem geformten Profil (35) vorgesehen ist, das mit dem Nockenelement (13) zusammenwirkt.

4. Kopplungsvorrichtung nach Anspruch 3, **dadurch gekennzeichnet, dass** der erste Abschnitt (15) Kerben (19) umfasst, die gemäß der Axialrichtung an einem Mantel des Zugstangenelements (12) positioniert sind.

5. Kopplungsvorrichtung nach Anspruch 3, **dadurch gekennzeichnet, dass** der zumindest eine weitere Abschnitt des Zugstangenelements (12), der einen größeren Durchmesser aufweist, einen zweiten zylindrischen Abschnitt (16) mit einem größeren Durchmesser, der an dem Zentrum des Zugstangenelements (12) positioniert ist, sowie einen dritten zylindrischen Abschnitt (22) mit einem geringfügig kleinerem Durchmesser in Bezug auf den zweiten Abschnitt (16) umfasst, wo die Öffnung (23) positioniert ist.

6. Kopplungsvorrichtung nach Anspruch 5, **dadurch gekennzeichnet, dass** an dem freien Ende, das zu der Außenseite dieses dritten zylindrischen Abschnitts (22) weist, radiale Schlitze (25) für die korrekte Montage des sich ausdehnenden Elements (14), das durch eine Klinge definiert ist, und zur Orientierung und zur Demontage der Zugstange (12) vorgesehen sind.

7. Kopplungsvorrichtung nach Anspruch 6, **dadurch gekennzeichnet, dass** eines der Enden (31) des sich ausdehnenden Elements (14) zur Positionierung innerhalb des ersten Abschnitts (15) des Zugstangenelements (12), das seine Ausdehnung bewirkt, geeignet ist.

8. Kopplungsvorrichtung nach Anspruch 6, **dadurch gekennzeichnet, dass** in einem seiner flachen Abschnitte (32) das sich ausdehnende Element (14) vorragende Seitenkerben (33) für eine Vormontagereibung und eine Reihe von Löchern (34) zur Demontage aufweist.

## Revendications

1. Dispositif d'assemblage pour meubles et articles d'ameublement situé entre un épaulement (18) et une base (21), comportant, en combinaison, un élément formant tirant (12), un élément formant came (13) et un élément d'écartement (14) qui peut être inséré dans l'élément formant tirant (12), ledit élément formant tirant (12) et ledit élément formant came (13) ayant une forme sensiblement cylindrique avec des axes principaux (X et Y) perpendiculaires l'un à l'autre et se coupant à l'intérieur de trous (20) et (26) de ladite base (21) du meuble, lesdits tirant (12), élément formant came (13) et élément d'écartement (14) étant en métal ou en alliages métalliques, lesdits tirants (12) et ledit élément formant came (13) comprenant des moyens de serrage réciproque par l'activation dudit élément formant came (13), **caractérisé en ce que** ledit élément formant came (13) a une forme de coupelle et est situé dans un trou borgne (26) et dans un des bords libres de la surface latérale, il a un rebord (37) de came de serrage apte à coopérer avec un profil modelé (35) d'une ouverture (23) située dans la partie du côté cylindrique de l'élément formant tirant (12), lesdits éléments formant tirants (12), élément formant came (13) et élément d'écartement (14) étant réalisés par déformation à froid d'une tôle ou d'un fil.

2. Dispositif d'assemblage selon la revendication 1, **caractérisé en ce que** ladite ouverture (23) comprend, sur sa surface périphérique, ledit profil modelé (35) et une dent (24) qui coopère avec l'élément formant came (13) de façon qu'il n'y ait que des contraintes axiales sur le tirant et une liaison pour la tenue verticale.

3. Dispositif d'assemblage selon la revendication 1, **caractérisé en ce que** ledit élément formant tirant (12) comprend une première partie conique (15) à dents extérieures sans tranchant (10), qui peut être insérée dans un trou borgne (17) situé dans ledit épaulement (18), et au moins une autre partie, d'un plus grand diamètre (16, 22), qui peut être insérée dans un trou de ladite base (21) et où se trouve une ouverture (23) à profil modelé (35) qui coopère avec ledit élément formant came (13).

4. Dispositif d'assemblage selon la revendication 3, **caractérisé en ce que** ladite première partie (15) comprend des rainures (19) disposées dans la direction axiale sur une enveloppe de l'élément formant tirant (12).

5. Dispositif d'assemblage selon la revendication 3, caractérisé ce que ladite au moins une autre partie de l'élément formant tirant (12), d'un plus grand diamètre, comprend une deuxième partie cylindrique (16) d'un plus grand diamètre, placée au centre de l'élément formant tirant (12), et une troisième partie cylindrique (22), d'un diamètre un peu plus petit que celui de la deuxième partie (16), où se trouve ladite ouverture (23).

6. Dispositif d'assemblage selon la revendication 5, **caractérisé en ce que**, à l'extrémité libre, orientée vers l'extérieur de ladite troisième partie cylindrique (22), se trouvent des encoches radiales (25) pour un bon montage dudit élément d'écartement (14) défini par une lame et pour l'orientation et le démontage du tirant (12).

7. Dispositif d'assemblage selon la revendication 6, **caractérisé en ce qu'**une des extrémités (31) dudit élément d'écartement (14) est apte à être placée à l'intérieur de ladite première partie (15) dudit élément formant tirant (12) en provoquant son expansion.

8. Dispositif d'assemblage selon la revendication 6, **caractérisé en ce que**, dans une de ses parties planes (32), ledit élément d'écartement (14) a des entailles latérales débordantes (33) pour provoquer un frottement avant le montage et une série de trous (34) pour le démontage.
